# EUROPÄISCHE PATENTSCHRIFT

(11) **EP 4 710 002 B1**
(45) Veröffentlichungstag und Bekanntmachung des Hinweises auf die Patenterteilung: **15.07.2026**
(21) Anmeldenummer: 25711439.7
(22) Anmeldetag: 07.03.2025
(51) Int. Cl.: F16B 5/02, F16B 33/00, F16B 33/02, F16B 5/00, F16B 15/00, F16B 35/04

(54) **BESCHICHTETE SCHRAUBE SOWIE ULTRASCHALLSCHWINGSYSTEM MIT EINER SOLCHEN**
COATED SCREW AND ULTRASONIC VIBRATION SYSTEM WITH SUCH A SCREW
VIS REVÊTUE ET SYSTÈME À VIBRATIONS ULTRASONORES DOTÉ D'UNE TELLE VIS

(30) Priorität: 19.03.2024 DE 102024107854
(43) Veröffentlichungstag der Anmeldung: 18.03.2026
(73) Patentinhaber: Herrmann Ultraschalltechnik GmbH & Co. KG, 76307 Karlsbad (DE)
(72) Erfinder: PORTJE, Volker, 76307 Ittersbach (DE); VOGLER, Ulrich, 88690 Uhldingen-Mühlhofen (DE)
(74) Vertreter: WSL Patentanwälte Partnerschaft mbB
(86) Internationale Anmeldenummer: PCT/EP2025/056277
(87) Internationale Veröffentlichungsnummer: WO 2025/195802

(56) Entgegenhaltungen:
- EP-A1- 4 238 662
- CN-A- 111 637 128
- US-B1- 11 759 968
- US-B2- 9 382 936

## Beschreibung

Die vorliegende Erfindung betrifft ein System bestehend aus einer ersten und einer zweiten Komponente, wobei die erste Komponente eine Schraube ist oder eine solche Schraube aufweist. Insbesondere betrifft die vorliegende Erfindung ein Ultraschallschwingsystem mit einer solchen Schraube.

Ultraschallwerkzeuge werden z.B. eingesetzt, um Werkstücke, insbesondere Materialbahnen, zu verschweißen oder zu trennen. Hierzu weisen Ultraschallwerkzeuge eine Ultraschallschwingeinheit auf, die einen Konverter und eine Sonotrode umfasst. Dabei kann die Sonotrode direkt mit dem Konverter oder über einen Amplitudenverstärker mit dem Konverter verbunden sein. Häufig kommt hier eine Koppelschraube zum Einsatz, d.h. eine Schraube mit zwei Gewinden, wobei ein erstes Gewinde in die Sonotrode und ein zweites Gewinde in den Konverter oder falls vorhanden in den Amplitudenverstärker geschraubt wird. Eine gleiche Koppelschraube kann auch zur Verbindung zwischen Amplitudenverstärker und Konverter verwendet werden. Die zu verbindenden Teile haben dann entsprechende Innengewinde, in welche die beiden Gewinde der Koppelschraube eingreifen.

Das Werkstück, beispielsweise eine Kunststofffolie, ist in der Regel auf einem Gegenwerkzeug (auch Amboss genannt) angeordnet, wobei das Werkstück auch kontinuierlich über das Gegenwerkzeug gefördert werden kann. Bei der Bearbeitung des Werkstückes befindet sich das Werkstück jedenfalls zwischen Sonotrode und Gegenwerkzeug.

Der Konverter weist in der Regel mehrere Piezoelemente auf, welche eine anliegende elektrische Wechselspannung, die im Allgemeinen von einem Generator zur Verfügung gestellt wird, in eine mechanische Schwingung gleicher Frequenz umwandeln. Aus Sicherheitsgründen kann es gewünscht sein, ein Konvertergehäuse, welches die Piezoelemente umgibt, mit Masse zu verbinden, d.h. zu erden.

Gleichzeitig soll in manchen Fällen eine Berührung zwischen Sonotrode und Gegenwerkzeug erfasst werden. So ist aus der EP 0 790 888 B1 bekannt, dass mittels einer Messeinrichtung eine Änderung des Widerstandes, des Stromflusses oder der Spannung zwischen Sonotrode und Gegenwerkzeug erfasst werden soll.

In diesen Fällen darf die Sonotrode nicht über den Konverter geerdet werden, sondern muss von diesem elektrisch isoliert werden. In der US 11,759,968 B1 ist daher bereits vorgeschlagen worden, die Sonotrode mithilfe einer isolierenden Koppelschraube oder einer mit einer elektrischen Isolation beschichteten Koppelschraube mit dem Konverter bzw. einem zwischen Sonotrode und Konverter angeordneten Amplitudenverstärker zu verbinden. Alternativ oder in Kombination könnte eine solche Koppelschraube auch zwischen Amplitudenverstärker und Konverter angeordnet werden.

Verfügbare Koppelschrauben sind für den Einsatz in solchen Ultraschallanwendungen nicht ideal. Sie erfüllen nicht alle Anforderungen, die an eine solche Verbindung gestellt werden.

Erstens müssen die Koppelschrauben eine feste Verbindung zwischen Sonotrode und Konverter gewährleisten. Dies ist wichtig, um die Ultraschallschwingung verlustfrei zu übertragen.

Kunststoffschrauben sind dafür weniger geeignet, da sie schnell verschleißen und die Verbindung locker wird.

Zweitens müssen die Koppelschrauben elektrisch isolierend sein. Dies ist wichtig, um die beschriebene Berührungserkennung zu verwirklichen.

Kunststoffschrauben sind zwar elektrisch isolierend, aber sie sind nicht so fest wie Metallschrauben. Sie können daher bei häufigem Gebrauch oder bei hohen Belastungen schnell verschleißen. Außerdem können Kunststoffschrauben bei hohen Temperaturen schmelzen oder deformieren.

Die Verwendung einer metallischen Schraube mit einer isolierenden Beschichtung im Gewindebereich kann die Übertragungsverluste reduzieren und die elektrische Isolation gewährleisten. Allerdings ist diese Lösung nicht ideal. Die Beschichtung wird während des Einschraubens der Schraube häufig beschädigt oder wurde ungleichmäßig aufgebracht. Dies liegt daran, dass die isolierende Beschichtung zusätzlich auf die Schraube aufgebracht wurde und daher die Schraube dicker wird und sich nur unter größerer Kraftanstrengung in das Innengewinde einschrauben lässt. Während des Einschraubens wird dann eine erhebliche Kraft auf die Beschichtung ausgeübt.

Eine beschädigte Beschichtung kann dazu führen, dass die Schraube nicht mehr verwendet werden kann oder die elektrische Isolation nicht mehr gewährleistet ist. Eine ungleichmäßig aufgetragene Beschichtung kann zu einer ungleichmäßigen Kraftübertragung führen.

Aus der EP 4 238 662 A1 ist ein Ultraschallwerkzeug bekannt, bei dem eine elektrische Isolierung zwischen einer Sonotrode und weiteren Komponenten vorgesehen ist, um eine elektrische Kontakterkennung zu ermöglichen.

Ausgehend von dem beschriebenen Stand der Technik ist es daher Aufgabe der vorliegenden Erfindung ein System mit zwei über eine Schraube verbundene Komponenten zur Verfügung zu stellen, die einerseits fest miteinander verbunden sind, sodass eine Schwingung der einen Komponente nahezu ohne Verluste auf die andere Komponente übertragen werden kann, und andererseits die Gefahr einer Beschädigung der Isolationsbeschichtung minimiert.

Diese Aufgabe wird gelöst durch ein System nach Anspruch 1 sowie ein System nach Anspruch 15.

Der Nenndurchmesser eines Gewindes ist der Durchmesser eines imaginären Zylinders, der die Spitzen des Gewindeprofils eines Außengewindes umschließt. Der Nenndurchmesser ist der Durchmesser, der einem Gewinde seinen Namen gibt.

Beispiel: Ein M20-Gewinde hat einen Nenndurchmesser von 20 Millimetern. Das bedeutet, dass ein imaginärer Zylinder mit einem Durchmesser von 20 Millimetern die Profilspitzen des Außengewindes und die Gewindetäler des Innengewindes umschließt.

Der Nenndurchmesser ist nicht gleich dem tatsächlichen Durchmesser des Gewindes. Der tatsächliche Durchmesser eines Außengewindes ist niemals größer und in der Regel kleiner als der Nenndurchmesser. Der Unterschied zwischen dem Nenndurchmesser und dem tatsächlichen Durchmesser wird durch die Toleranz bestimmt. Die Toleranzen für Gewinde sind in Normen festgelegt.

Bei den bekannten Schrauben stimmen die Nenndurchmesser von dem Innengewinde und dem Schraubengewinde überein, wobei durch geeignete Wahl der Toleranzen sichergestellt wird, dass der tatsächliche Durchmesser des Schraubengewindes nicht größer als der Nenndurchmesser des Innengewindes ist.

Erfindungsgemäß wird der Nenndurchmesser dᵣ des Gewindes des Kernelementes kleiner gewählt als der Nenndurchmesser D des Innengewindes. Durch die Verringerung des Nenndurchmessers des metallischen Gewindes wird Raum für die Aufnahme der Beschichtung geschaffen, wenn die Schraube mit dem ersten Außengewinde in das Innengewinde eingeschraubt worden ist. Das erste Außengewinde wird somit von dem Gewinde des Kernelementes und der das Gewinde des Kernelementes bedeckenden Beschichtung gebildet.

Die Gefahr, dass beim Befestigen der Schraube die Beschichtung abplatzt, ist deutlich reduziert worden.

In einer besonders bevorzugten Ausführungsform ist vorgesehen, dass der Nenndurchmesser dᵣ entweder
i) mindestens 0,1 mm, vorzugsweise mindestens 0,2 mm und besonders bevorzugt zwischen 0,25 mm und 0,8 mm kleiner als der Nenndurchmesser D ist, und/oder
ii) mindestens 1 %, vorzugsweise mindestens 2 % und besonders bevorzugt zwischen 2,5 % und 8 % kleiner als der Nenndurchmesser D ist.

Diese Werte haben sich nach Experimenten als besonders bevorzugt erwiesen.

In einer weiteren bevorzugten Ausführungsform ist vorgesehen, dass das Gewinde des Kernelements einen Kerndurchmesser d₁, der kleiner als der Kerndurchmesser D₁ ist, hat.

Durch diese Maßnahme wird auch in dem Bereich, in welchen das Innengewinde zwischen die Gewindeflanken eingreift, mehr Platz für die Beschichtung bereitgestellt.

In einer weiteren bevorzugten Ausführungsform weist das Gewinde des Kernelementes einen Gewindeflankenwinkel α₁ auf, der größer als der Gewindeflankenwinkel α des Innengewindes ist, wobei vorzugsweise der Gewindeflankenwinkel α₁ mindestens 0,5°, vorzugsweise mindestens 1° und besonders bevorzugt zwischen 1,25° und 2,5° größer als der Gewindeflankenwinkel α des Innengewindes ist. Der Gewindeflankenwinkel beträgt beispielsweise bei metrischen Gewinden 60°. Es hat sich gezeigt, dass das Gewinde des Kernelementes am besten einen Gewindeflankenwinkel von etwa 62° aufweist, was bedeutet, dass insbesondere im Bereich der Zahnflankenköpfe des ersten Gewindes Raum für die elektrisch isolierende Beschichtung bereitgestellt wird. Zudem wird die Druckbelastung auf den Gewindeflanken durch diese Maßnahme optimiert.

Um die Haltbarkeit der elektrisch isolierenden Beschichtung auf dem Gewinde des Kernelementes auch dann, wenn über das Gewinde erhebliche Kräfte übertragen werden müssen, zu erhöhen, ist in einer bevorzugten Ausführungsform vorgesehen, dass das Gewinde des Kernelementes eine Zahnflankenkopffläche aufweist, die konvex gekrümmt ist, wobei vorzugsweise die gekrümmte Zahnflankenkopffläche einen Krümmungsradius aufweist, der kleiner als 1 mm ist aber größer als 0,1mm ist

Auch wenn die vorliegende Erfindung grundsätzlich an jeder Art von Gewinde mit Vorteil verwendet werden kann, ist das Innengewinde in einer bevorzugten Ausführungsform ein metrisches ISO-Innengewinde.

Die Beschichtung hat mit Vorteil eine Dicke zwischen 0,02 und 0,2 mm und vorzugsweise zwischen 0,025 und 0,1 mm.

In einer weiteren bevorzugten Ausführungsform wird für die elektrisch isolierende Beschichtung ein Material ausgewählt aus der Gruppe bestehend aus Parylene, Polyimide, Epoxidharze, Polyurethan, Aluminiumoxid (Al₂O₃), Siliziumdioxid (SiO₂), Zirkoniumdioxid (ZrO₂), Titanoxid (TiO₂), Nitride (z. B. Siliziumnitrid, Aluminium-Nitrid) ist, wobei vorzugsweise das Material eine Reinheit von mindestens 98% und besonders bevorzugt von mindestens 99,4% hat. In der Praxis wurden die besten Ergebnisse mit Aluminiumoxid erzielt.

Das elektrisch isolierende Material wird mit Vorteil auch auf die Stirnfläche des Gewindes aufgebracht. Auf der Stirnfläche kann auch eine dünnere oder dickere Beschichtung gewählt werden. Die oben genannten bevorzugten Schichtdicken betreffen die Flächen der Schraube, die das Gewinde aufweisen.

In einer bevorzugten Ausführungsform ist die Schraube als Koppelschraube ausgebildet, was bedeutet, dass die Schraube zur Befestigung einer Sonotrode an einem Konverter oder an einem Amplitudentransformator vorgesehen ist und ein zweites Außengewinde aufweist. Das zweite Außengewinde muss keine Beschichtung aufweisen.

Die Koppelschraube kann jedes System bestehend aus zwei Komponenten miteinander verbinden. Dabei greift die Koppelschraube entweder
i) mit dem ersten Außengewinde in eine Gewindebohrung der ersten Komponente und mit dem zweiten Außengewinde in eine Gewindebohrung der zweiten Komponente ein oder
ii) mit dem ersten Außengewinde in eine Gewindebohrung der zweiten Komponente und mit dem zweiten Außengewinde in eine Gewindebohrung der ersten Komponente ein.

Dabei weist die Gewindebohrung, in welche das erste Außengewinde eingreift, den Nenndurchmesser D, den Gewindeflankenwinkel α, den Kerndurchmesser D₁ und die Gewindetiefe H₁ auf.

In einer bevorzugten Ausführungsform ist zwischen erstem und zweitem Außengewinde der Schraube ein Bund angeordnet ist, welcher einen Durchmesser d_{B} aufweist, der größer als der Nenndurchmesser dᵣ ist, wobei vorzugsweise der Durchmesser d_{B} um mindestens 5 %, besonders bevorzugt um mindestens 10% und am besten zwischen 12% und 25% größer als der Nenndurchmesser dᵣ ist. Der Bund kann beispielsweise umlaufend angeordnet sein. Er dient dazu, eine definierte Einschraubposition festzulegen. Das erste Außengewinde wird soweit in das korrespondierende Innengewinde eingeschraubt bis der Bund auf eine entsprechende Anschlagfläche auf dem das korrespondierende Innengewinde aufweisenden Element aufschlägt.

Weiterhin ist es von Vorteil, wenn der Bund an seiner dem ersten Außengewinde zugewandten Seite mit einem elektrisch isolierenden Material beschichtet ist, wobei vorzugsweise der Bund vollumfänglich beschichtet ist. Auch hier muss die Beschichtung an dem Bund nicht die selbe Dicke aufweisen, wie die Beschichtung des Gewindes. Die oben genannten bevorzugten Beschichtungsdicken sind für den Bereich der Schraube optimiert, welcher das Gewinde aufweist. Bereiche auf der Schraube, die keine Gewindegänge aufweisen, können eine davon abweichende Beschichtungsdicke aufweisen.

Besonders bevorzugt ist das System ein Ultraschallschwingsystem mit einer Sonotrode und einem Konverter. Optional kann zwischen Sonotrode und Konverter ein Amplitudentransformator vorgesehen sein. Erfindungsgemäß ist entweder
i) die erste Komponente eine Sonotrode und die zweite Komponente ein Konverter, oder
ii) die erste Komponente eine Sonotrode und die zweite Komponente ein Amplitudentransformator oder
iii) die erste Komponente ein Amplitudentransformator und die zweite Komponente ein Konverter.

Durch das erfindungsgemäß Ultraschallschwingsystem ist es daher nun möglich, die Sonotrode von weiteren Elementen des Ultraschallschwingsystems zu isolieren und dennoch eine zuverlässige Übertragung der von dem Konverter erzeugten Ultraschallschwingung auf die Sonotrode zu gewährleisten.

Die erste und die zweite Komponente sind vorzugsweise jeweils eine Sonotrode, ein Amplitudentransformator oder ein Konverter. Es ist daher nicht notwendig eine Koppelschraube mit einem zweiten Außengewinde zu verwenden. Die Schraube könnte auch auf andere Art an der ersten Komponente befestigt sein oder mit dieser aus einem Stück gefertigt sein.

Es ist beispielsweise möglich, dass die zweite Komponente eine Sonotrode oder ein Amplitudentransformator ist, wobei das Innengewinde in einer Koppelfläche angeordnet ist, wobei die Koppelfläche mit einem elektrisch isolierenden Material beschichtet ist, wobei vorzugsweise Koppelfläche und das Gewinde mit dem gleichen isolierenden Material beschichtet sind.

Dieses System kann als Austauschteil in bestehende Ultraschallschwingeinheiten eingefügt werden, um dort die gewünschte Isolierung der Sonotrode vom Konverter und dem Konvertergehäuse zu verwirklichen.

Es versteht sich, dass anstelle einer Schraube mit beschichtetem Außengewinde auch ein Bauteil mit beschichtetem Innengewinde vorgesehen sein kann. Dieses Bauteil ist dafür vorgesehen, dass eine Schraube mit einem Außengewinde eingeschraubt wird, wobei das Außengewinde der Schraube einen Nenndurchmesser D', einen Gewindeflankenwinkel α', einen Kerndurchmesser D'₁ und eine Gewindetiefe H'₁ hat, wobei das Bauteil aus einem metallischen Material besteht und das Bauteil eine zumindest im Bereich des Innengewindes bedeckende Beschichtung aus einem elektrisch isolierenden Material hat, wobei das Innengewinde einen Nenndurchmesser d'ᵣ, hat, der größer als der Nenndurchmesser D' ist. Alle Merkmale, die vorstehend in Bezug auf die Schraube beschrieben wurden, können in gleicher Weise auch für das Bauteil bzw. dessen Innengewinde vorgesehen sein. Wesentlich ist dabei, dass das Innengewinde einen Nenndurchmesser d'ᵣ hat, der größer als der Nenndurchmesser der Schraube ist.

Ein erfindungsgemäßes System besteht dann aus einer ersten und einer zweiten Komponente, wobei die erste Komponente ein Bauteil mit beschichtetem Innengewinde ist und die zweite Komponente eine Schraube mit einem Außengewinde mit einem Nenndurchmesser D', einem Gewindeflankenwinkel α', einem Kerndurchmesser D'₁ und einer Gewindetiefe H'₁ ist oder eine solche aufweist, wobei die Schraube in das Innengewinde eingeschraubt ist.

Weitere Vorteile, Merkmale und Anwendungsmöglichkeiten werden deutlich anhand der folgenden Beschreibung einer bevorzugten Ausführungsform und der zugehörigen Figuren. Es zeigen:
- Figur 1: eine schematische Darstellung eines Ausschnitts einer Schraube in einem Innengewinde des Standes der Technik,
- Figur 2: eine Draufsicht auf einen Gewindekern einer erfindungsgemäßen Ausführungsform,
- Figur 3: eine Ausschnittsvergrößerung des Bereiches X von Figur 2,
- Figur 4: eine Ausschnittsvergrößerung des Bereiches W von Figur 2,
- Figur 5: eine teilgeschnittene Ansicht des Kernelements aus Figur 2 mit aufgetragener Beschichtung,
- Figur 6: eine Detailvergrößerung des Bereiches Z aus Figur 5,
- Figur 7: eine Detailvergrößerung des Bereiches Y aus Figur 5,
- Figur 7a: eine Detailvergrößerung des Bereiches Y einer alternativen Ausführungsform,
- Figur 8: eine perspektivische Darstellung einer erfindungsgemäßen Schraube,
- Figur 9: eine schematische Darstellung der erfindungsgemäßen Gewindegeometrie im Vergleich zu der Geometrie eines genormten metrischen Gewindes,
- Figur 10: eine Seitenansicht auf eine erfindungsgemäße Ausführungsform eines Systems,
- Figur 11: eine Schnittansicht durch das System von Figur 10 und
- Figur 12: eine Detailvergrößerung des Abschnittes X von Figur 11.

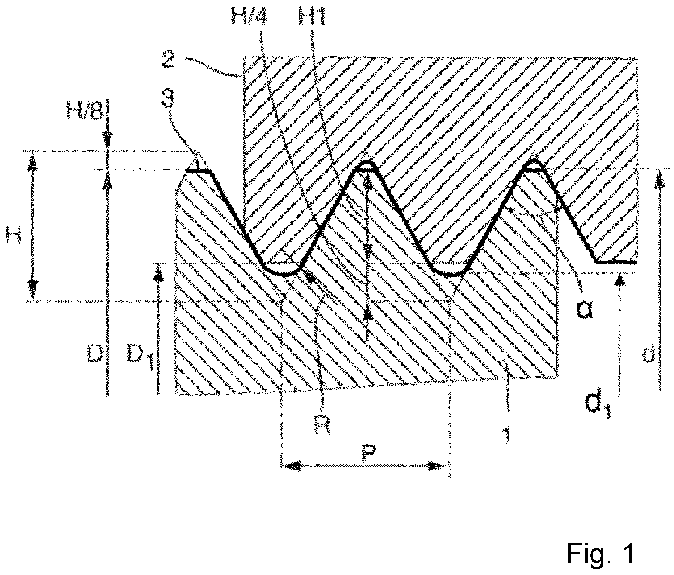

In Figur 1 ist eine schematische Schnittansicht der Geometrie eines metrischen ISO-Gewindes dargestellt. Die Schraube 1 wird in ein Element 2 mit einem Innengewinde, z.B. in eine Mutter, eingeschraubt.

Die folgenden Begriffe lassen sich anhand der Figur verdeutlichen:

| | |
|---|---|
| Nenndurchmesser: | Der Nenndurchmesser ist der Durchmesser des Gewindes, der in den Normen angegeben ist. Er wird mit den Buchstaben d für das Außengewinde und D für das Innengewinde bezeichnet. |
| Steigung: | Die Steigung ist der Abstand zwischen zwei benachbarten Gewindegängen. Sie wird mit dem Buchstaben P bezeichnet. |
| Flankenwinkel: | Der Flankenwinkel ist der Winkel zwischen den Flanken der Gewindegänge. Er ist im Stand der Technik bei dem Innengewinde und dem zugeordneten Außengewinde identisch. Er beträgt bei metrischen Gewinden 60°. |
| Kerndurchmesser: | Der Kerndurchmesser ist der Durchmesser des Gewindes ohne die Flanken. Er wird mit den Buchstaben d1 für das Außengewinde und D1 für das Innengewinde bezeichnet. |
| Zahnflankenkopfflächen: | Die Zahnflankenkopfflächen 3 sind die Flächen an der Spitze der Gewindegänge. Sie sind bei metrischen ISO-Gewinden eben ausgebildet. |

Bei metrischen Gewinden sind die Nenndurchmesser des Innengewindes und des Außengewindes prinzipiell gleich. Allerdings werden durch die Toleranzen sichergestellt, dass der Durchmesser der Schraube keinesfalls größer als der Durchmesser des Innengewindes ist.

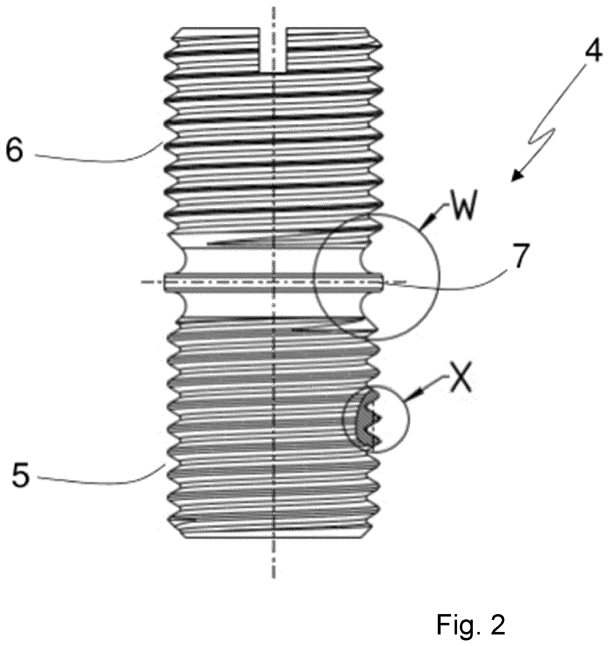

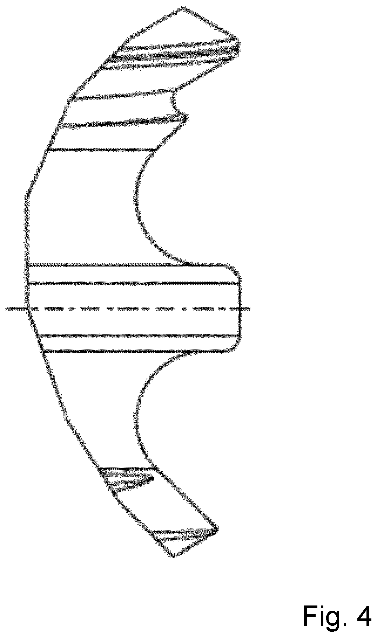

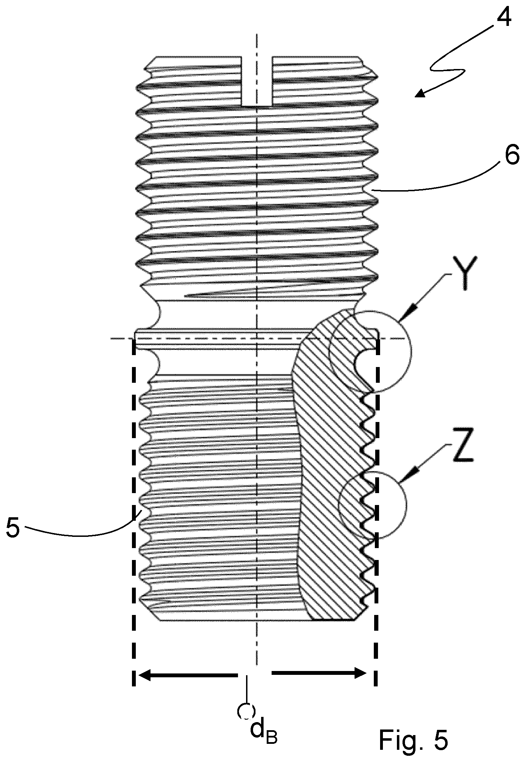

In den Figuren 2 bis 8 ist eine Ausführungsform einer erfindungsgemäßen Koppelschraube gezeigt. In den Figuren 2 bis 4 ist die Koppelschraube ohne elektrisch isolierende Beschichtung und in den Figuren 5 bis 8 mit elektrisch isolierender Beschichtung dargestellt.

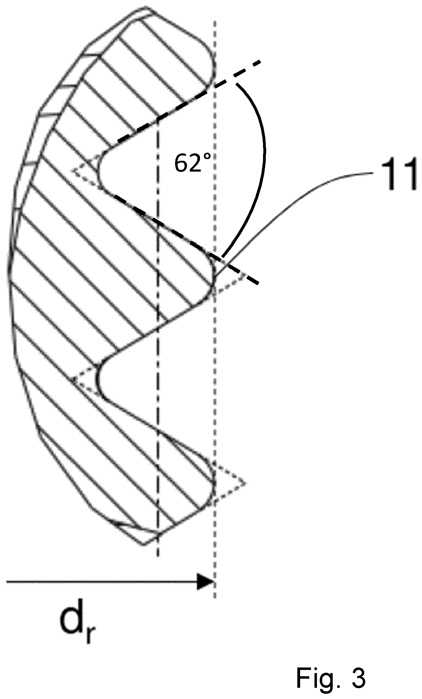

In Figur 2 ist eine Seitenansicht auf die Koppelschraube 4 gezeigt. Die Koppelschraube 4 weist ein erstes Gewinde 5 sowie ein zweites Außengewinde 6 auf, die voneinander beabstandet sind und zwischen denen ein kragenförmiger Bund 7 ausgebildet ist. Das zweite Außengewinde 6 ist als metrisches ISO-Gewinde ausgebildet und weist keinerlei Besonderheiten auf. Das erste Gewinde 5 ist in Figur 2 ohne elektrisch isolierende Beschichtung dargestellt. Erst mit der elektrisch isolierenden Beschichtung wird das erste Außengewinde gebildet. Das erste Außengewinde wird somit sowohl von dem Gewinde auf dem metallischen Kernelement als auch von der darauf aufgebrachten elektrisch isolierenden Beschichtung gebildet. Der Nenndurchmesser ist gegenüber dem zweiten Außengewinde 6 reduziert. Wie in der Ausschnittsvergrößerung "X", die in Figur 3 zu sehen ist, zu erkennen ist, beträgt der Flankenwinkel des Gewindes des metallischen Kernelementes im Bereich des Gewindes 62°. Zudem sind die Zahnflankenkopfflächen 11 konvex gekrümmt und weisen hier einen Krümmungsradius von 0,2 mm auf. Der untere Teil der Koppelschraube 4 wird dann beschichtet, sodass der Endzustand der Koppelschraube 4 in den Figuren 5 bis 8 dargestellt ist.

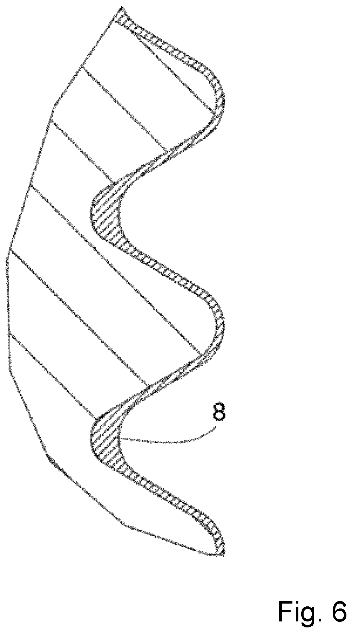

In der Detailvergrößerung des Abschnittes "Z", die in Figur 6 dargestellt ist, ist zu erkennen, dass sich die Beschichtung ungleichmäßig über das Gewinde des Kernelementes verteilt. Während die Beschichtung im Bereich der Zahnflankenkopfflächen 3 und an den daran anschließenden Zahnflanken relativ dünn, im gezeigten Beispiel mit einer Dicke von 0,04 mm, ausgeführt ist, ist die elektrisch isolierende Beschichtung 8 im Bereich des Gewinderillengrundes bis zu 0,15 mm dick.

Wie in der Detailvergrößerung des Bereiches Y zu erkennen ist, wird die elektrisch isolierende Beschichtung bis auf den Bund 7 geführt und endet auf diesem. Das zweite Gewinde 6 ist nicht beschichtet. Der Außendurchmesser des ersten Gewindes 5 ist trotz aufgebrachter elektrisch isolierender Beschichtung immer noch etwas geringer als der Außendurchmesser der metrischen Schraube, was bedeutet, dass, wenn das erste Gewinde 5 in ein metrisches Innengewinde geschraubt wird, im Bereich der Zahnflankenkopfflächen und den sich daran anschließenden Abschnitten der Zahnflanken nur eine reduzierte Kraft beim Einschrauben aufgebracht wird, was zu einer Verbesserung der Haltbarkeit der elektrisch isolierenden Beschichtung führt.

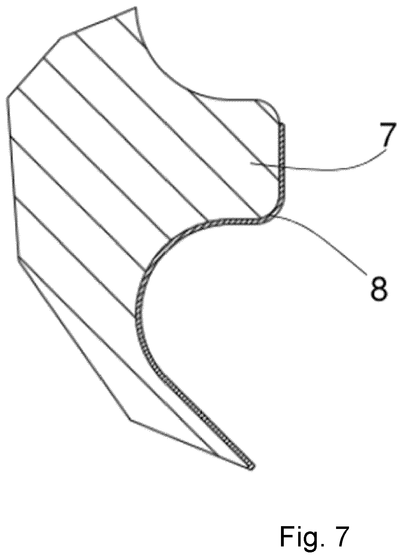

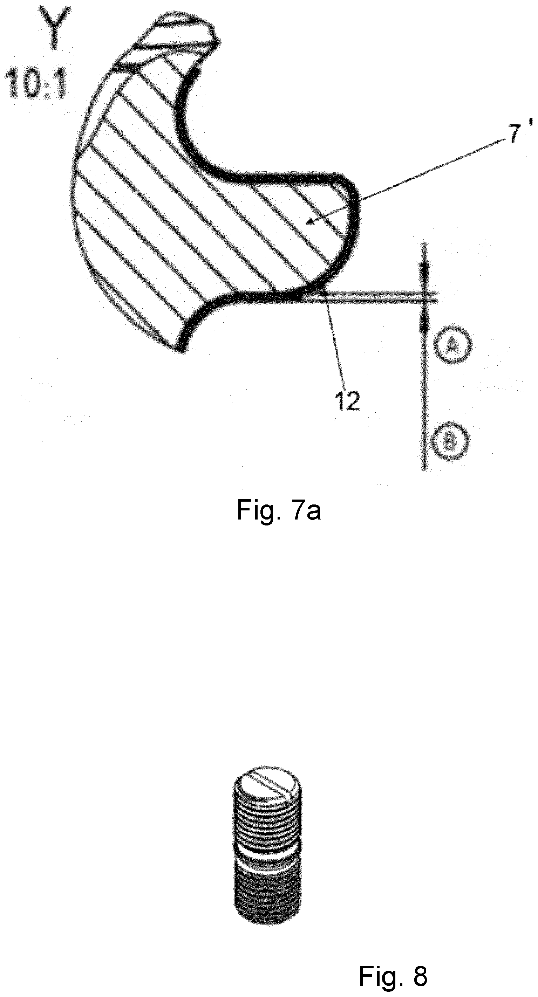

Figur 7a zeigt eine korrespondierende Detailvergrößerung einer alternativen Ausführungsform. Die elektrisch isolierende Beschichtung 8 deckt den Bund 7' hier vollständig ab. Der Bund 7' ist hier auch nicht symmetrisch ausgeführt. Der Bund 7' weist zwei sich im wesentlichen senkrecht zur Schraubenachse erstreckende Seitenflächen sowie eine die beiden Seitenflächen verbindende, im wesentlichen parallel zur Schraubenachse verlaufende Umfangsfläche auf. Die Umfangsfläche hat zu der Seitenfläche, die dem ersten Außengewinde zugewandt ist, einen Übergangsradius, der größer als der Übergangsradius ist, welcher die Umfangsfläche zu der Seitenfläche ausbildet, die dem zweiten Außengewinde zugewandt ist,

Der Bund 7, 7' hat einen Durchmesser d_{B}, der größer als der Nenndurchmesser dᵣ ist.

In Figur 8 ist eine perspektivische Ansicht der erfindungsgemäßen Koppelschraube gezeigt.

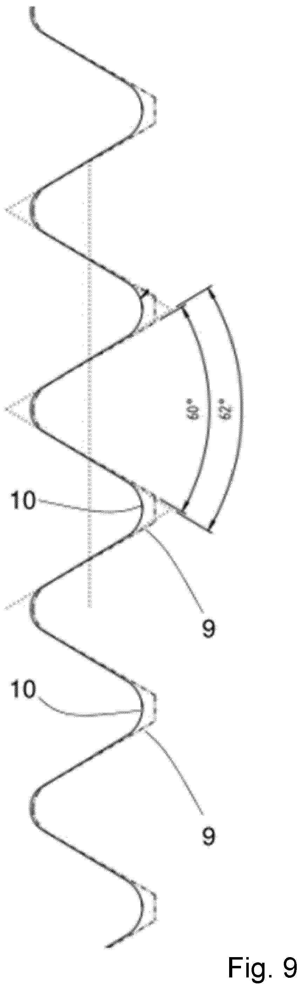

Zur Verdeutlichung zeigt Figur 9 die beiden Gewindeprofile, nämlich einmal das metrische Gewindeprofil 9 und das erfindungsgemäße Profil 10 in einer Schnittansicht. Deutlich zu erkennen ist, dass der Flankenwinkel bei der erfindungsgemäßen Ausbildung des Gewindes des Kernelementes größer ist als der Flankenwinkel des metrischen Gewindes. Darüber hinaus ist die Zahnflankenkopffläche gegenüber dem metrischen Gewinde deutlich reduziert und konkav gekrümmt ausgeführt, mit der Folge, dass die Kraftübertragung zwischen dem optimierten Gewindeprofil 10 und einem metrischen Innengewinde in Bereiche verlegt wird, die näher an der Drehachse der Schraube liegen, wodurch, wie Versuche bewiesen haben, die Haltbarkeit der isolierenden Beschichtung deutlich verbessert wird.

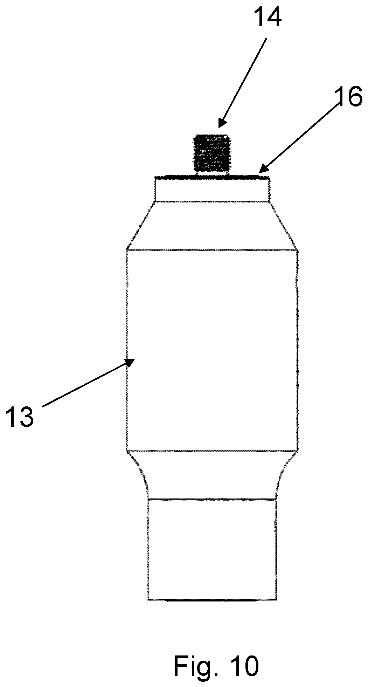

In den Figuren 10-12 ist eine erfindungsgemäße Ausführungsform eines Systems gezeigt.

Figur 10 zeigt eine Seitenansicht eines Amplitudentransformator 13, in dem eine Koppelschraube 14 in eine Anschlussfläche eingeschraubt ist. Dieser Anschlussfläche ist dafür vorgesehen, mit einer korrespondierenden Anschlussfläche eines Konverters (nicht gezeigt) in Kontakt zu treten.

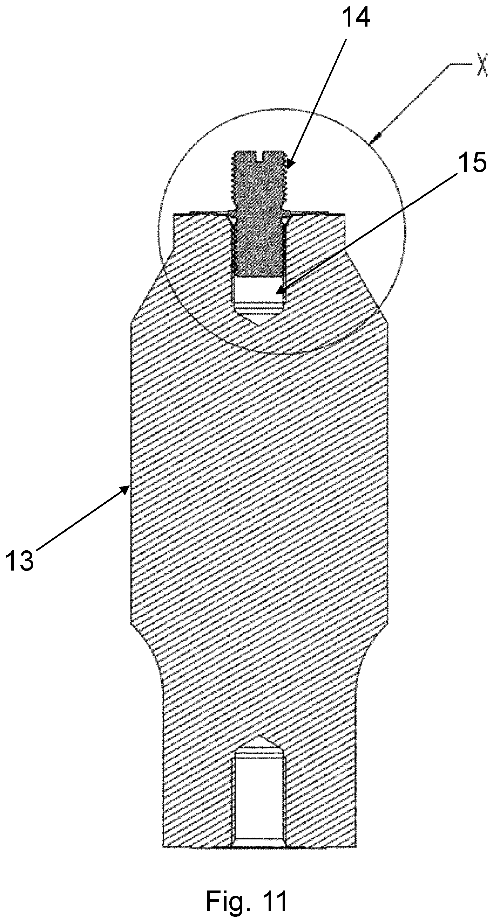

Figur 11 zeigt eine entsprechende Schnittansicht. Man erkennt, dass der Amplitudentransformator 13 ein Innengewinde 15 aufweist, in welches die Koppelschraube mit ihrem ersten Außengewinde, welches die erfindungsgemäß ausgebildete Beschichtung aufweist, eingeschraubt ist.

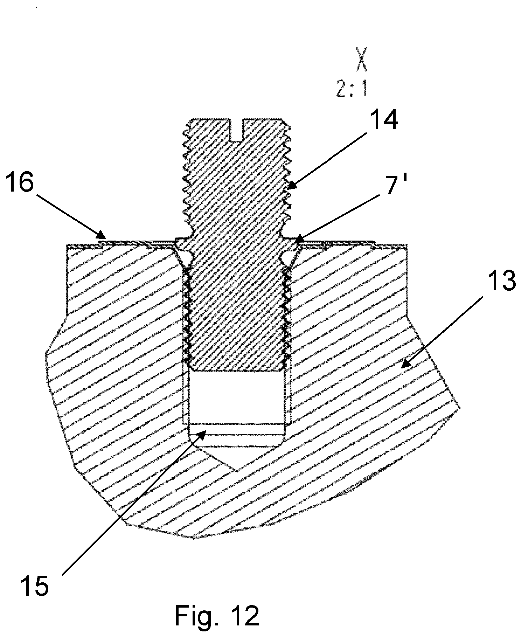

In Figur 12 ist eine Detailvergrößerung des Abschnittes X von Figur 11 dargestellt. Deutlich zu erkennen ist hier, dass der Amplitudentransformator 13 an seiner Anschlussfläche eine elektrische isolierende Beschichtung 16 aufweist. Die Koppelschraube 14 wird nun soweit in das Innengewinde 15 des Amplitudentransformator 13 eingeschraubt, bis der Bund 7' an einer entsprechenden Anschlagsfläche des Amplitudentransformator 13 anliegt. Bei dem Einbringen der Koppelschraube 14 in das Innengewinde 15 des Amplitudentransformator 13 ist große Vorsicht walten zu lassen, sodass es von Vorteil ist, wenn das Einbringen der Koppelschraube 14 bereits beim Hersteller erfolgt. Das abgebildete System kann dann beim Kunden in einer Ultraschallschwingeinheit eingesetzt werden, wobei dann ein entsprechender Konverter eine Anschlussfläche mit Innengewinde aufweist, in welches das zweite Außengewinde der Koppelschraube 14, welches keine elektrische Beschichtung aufweist, eingeschraubt wird.

### Bezugszeichenliste

- 1: Schraube mit Außengewinde
- 2: Element mit Innengewinde
- 3: Zahnflankenkopfflächen
- 4: Koppelschraube
- 5: erstes Gewinde
- 6: zweites Gewinde
- 7, 7': Bund
- 8: elektrisch isolierende Beschichtung
- 9: metrisches Gewindeprofil
- 10: optimiertes Gewindeprofil des Kernelementes
- 11: gekrümmte Zahnflankenkopffläche
- 12: Übergangsradius
- 13: Amplitudentransformator
- 14: Koppelschraube
- 15: Innengewinde
- 16: elektrisch isolierende Beschichtung

## Patentansprüche

1. System bestehend aus einer ersten und einer zweiten Komponente, wobei die erste Komponente eine Schraube (4,14) ist oder eine solche Schraube (4,14) aufweist und die zweite Komponente ein Innengewinde (15) mit einem Nenndurchmesser D, einen Gewindeflankenwinkel α, einen Kerndurchmesser D₁ und eine Gewindetiefe H₁ hat, in welches die Schraube der ersten Komponente eingeschraubt ist, wobei die Schraube (4,14) ein erstes Außengewinde (5) aufweist und aus einem metallischen Kernelement und einer das Kernelement zumindest im Bereich eines am Kernelement ausgebildeten Gewindes bedeckenden Beschichtung (8) aus einem elektrisch isolierenden Material besteht, wobei das Gewinde des metallischen Kernelements einen Nenndurchmesser dᵣ, aufweist, der kleiner als der Nenndurchmesser D ist, und wobei das erste Außengewinde der Schraube (4,14) an der elektrisch isolierenden Beschichtung (8) ausgebildet ist, welche auf das am metallischen Kernelement ausgebildete Gewinde aufgebracht ist.

2. System nach Anspruch 1, **dadurch gekennzeichnet, dass** die zweite Komponente eine Sonotrode oder ein Amplitudentransformator ist, wobei das Innengewinde (15) in einer Koppelfläche angeordnet ist, wobei die Koppelfläche mit einem elektrisch isolierenden Material (16) beschichtet ist, wobei vorzugsweise Koppelfläche und das Gewinde mit dem gleichen isolierenden Material beschichtet sind.

3. System nach Anspruch 1 oder 2, **dadurch gekennzeichnet, dass** der Nenndurchmesser dᵣ, entweder
i) mindestens 0,1 mm, vorzugsweise mindestens 0,2mm und besonders bevorzugt zwischen 0,25 mm und 0,8 mm kleiner als der Nenndurchmesser D ist, und/oder
ii) mindestens 1%, vorzugsweise mindestens 2% und besonders bevorzugt zwischen 2,5% und 8% kleiner als der Nenndurchmesser D ist.

4. System nach einem der vorherigen Ansprüche, **dadurch gekennzeichnet, dass** das Gewinde des Kernelementes einen Kerndurchmesser d₁, der kleiner als der Kerndurchmesser D₁ ist, aufweist

5. System nach einem der vorherigen Ansprüche, **dadurch gekennzeichnet, dass** das Gewinde des Kernelementes einen Gewindeflankenwinkel α₁ besitzt, der größer als der Gewindeflankenwinkel α ist, wobei vorzugsweise der Gewindeflankenwinkel α₁ mindestens 0,5°, vorzugsweise mindestens 1° und besonders bevorzugt zwischen 1,25° und 2,5° größer als der Gewindeflankenwinkel α ist.

6. System nach einem der vorherigen Ansprüche, **dadurch gekennzeichnet, dass** das Gewinde des Kernelementes eine Zahnflankenkopffläche (11) aufweist, die konvex gekrümmt ist, wobei vorzugsweise die gekrümmte Zahnflankenkopffläche (11) einen Krümmungsradius aufweist, der kleiner als 1mm ist, wobei besonders bevorzugt der Krümmungsradius größer als 0,1mm ist.

7. System nach einem der vorherigen Ansprüche, **dadurch gekennzeichnet, dass** das Innengewinde ein metrisches ISO-Innengewinde ist.

8. System nach einem der vorherigen Ansprüche, **dadurch gekennzeichnet, dass** die Beschichtung (8) eine Dicke zwischen 0,02 und 0,2 mm und vorzugsweise zwischen 0,025 und 0,1 mm hat.

9. System nach einem der vorherigen Ansprüche, **dadurch gekennzeichnet, dass** die elektrisch isolierende Beschichtung (8) ein Material ausgewählt aus der Gruppe bestehend aus Parylene, Polyimide, Epoxidharze, Polyurethan, Aluminiumoxid (Al₂O₃), Siliziumdioxid (SiO₂), Zirkoniumdioxid (ZrO₂), Titanoxid (TiO₂), Nitride (z. B. Siliziumnitrid, Aluminium-Nitrid) ist, wobei vorzugsweise das Material eine Reinheit von mindestens 98% und besonders bevorzugt von mindestens 99,4% hat.

10. System nach einem der vorherigen Ansprüche, **dadurch gekennzeichnet, dass** die Stirnfläche des Gewindes mit einem elektrisch isolierenden Material beschichtet ist.

11. System nach einem der vorherigen Ansprüche, **dadurch gekennzeichnet, dass** die zweite Komponente eine Sonotrode und die erste Komponente ein Konverter oder ein Amplitudentransformator ist und die Schraube (4, 14) aufweist, die ein zweites Außengewinde aufweist, wobei vorzugsweise das zweite Außengewinde keine Beschichtung aufweist.

12. System nach Anspruch 11, **dadurch gekennzeichnet, dass** zwischen erstem und zweitem Außengewinde ein Bund (7, 7') angeordnet ist, welcher einen Durchmesser d_{B} aufweist, der größer als der Nenndurchmesser dᵣ ist, wobei vorzugsweise der Durchmesser d_{B} um mindestens 5 %, besonders bevorzugt um mindestens 10% und am besten zwischen 12% und 25% größer als der Nenndurchmesser dᵣ ist.

13. System nach Anspruch 12, **dadurch gekennzeichnet, dass** der Bund (7, 7') an seiner dem ersten Außengewinde zugewandten Seite mit einem elektrisch isolierenden Material (8) beschichtet ist, wobei vorzugsweise der Bund (7, 7') vollumfänglich beschichtet ist.

14. System nach einem der vorherigen Ansprüche, **dadurch gekennzeichnet, dass** die Schraube entweder
mit dem ersten Außengewinde (5) in eine Gewindebohrung der ersten Komponente und mit dem zweiten Außengewinde (6) in eine Gewindebohrung der zweiten Komponente eingreift oder
mit dem ersten Außengewinde (5) in eine Gewindebohrung der zweiten Komponente und mit dem zweiten Außengewinde (6) in eine Gewindebohrung der ersten Komponente eingreift, wobei vorzugsweise das System ein Ultraschallschwingsystem ist, wobei entweder
die erste Komponente eine Sonotrode und die zweite Komponente ein Konverter, oder die erste Komponente eine Sonotrode und die zweite Komponente ein Amplitudentransformator oder
die erste Komponente ein Amplitudentransformator und die zweite Komponente ein Konverter ist.

15. System bestehend aus einer ersten und einer zweiten Komponente, wobei die erste Komponente ein Bauteil mit einem Innengewinde mit einem Nenndurchmesser d'ᵣ aufweist und aus einem metallischen Material besteht und eine das Bauteil zumindest im Bereich des Innengewindes bedeckende Beschichtung aus einem elektrisch isolierenden Material hat, und die zweite Komponente eine Schraube mit einem Außengewinde mit einem Nenndurchmesser D', einem Gewindeflankenwinkel α', einem Kerndurchmesser D'₁ und einer Gewindetiefe H'₁ ist oder eine solche aufweist, wobei die Schraube in das Innengewinde eingeschraubt ist, wobei der Nenndurchmesser d'ᵣ größer als der Nenndurchmesser D' ist.

## Claims

1. System consisting of a first and a second component, wherein the first component is a screw (4,14) or comprises such a screw (4,14) and the second component has an internal thread (15) with a nominal diameter D, a thread flank angle α, a core diameter D₁ and a thread depth H₁, into which the screw of the first component is screwed, wherein the screw (4,14) has a first external thread (5) and consists of a metallic core element and a coating (8) of an electrically insulating material covering the core element at least in the region of a thread formed on the core element, wherein the thread of the metallic core element has a nominal diameter dᵣ, which is smaller than the nominal diameter D, and wherein the first external thread of the screw (4,14) is formed on the electrically insulating coating (8), which is applied to the thread formed on the metallic core element.

2. System according to claim 1, **characterized in that** the second component is a sonotrode or an amplitude transformer, wherein the internal thread (15) is arranged in a coupling surface, wherein the coupling surface is coated with an electrically insulating material (16), wherein preferably the coupling surface and the thread are coated with the same insulating material.

3. System according to claim 1 or 2, **characterized in that** the nominal diameter dᵣ, is either
i) at least 0.1 mm, preferably at least 0.2 mm and particularly preferably between 0.25 mm and 0.8 mm smaller than the nominal diameter D, and/or
ii) at least 1%, preferably at least 2% and particularly preferably between 2.5% and 8% smaller than the nominal diameter D.

4. System according to one of the preceding claims, **characterized in that** the thread of the core element has a core diameter d₁, which is smaller than the core diameter D₁.

5. System according to one of the preceding claims, **characterized in that** the thread of the core element has a thread flank angle α₁ which is greater than the thread flank angle α, wherein preferably the thread flank angle α₁ is at least 0.5°, preferably at least 1° and particularly preferably between 1.25° and 2.5° greater than the thread flank angle α.

6. System according to one of the preceding claims, **characterized in that** the thread of the core element has a tooth flank head surface (11) which is convexly curved, wherein preferably the curved tooth flank head surface (11) has a radius of curvature which is smaller than 1 mm, wherein particularly preferably the radius of curvature is greater than 0.1 mm.

7. System according to one of the preceding claims, **characterized in that** the internal thread is a metric ISO internal thread.

8. System according to one of the preceding claims, **characterized in that** the coating (8) has a thickness between 0.02 and 0.2 mm and preferably between 0.025 and 0.1 mm.

9. System according to one of the preceding claims, **characterized in that** the electrically insulating coating (8) is a material selected from the group consisting of parylene, polyimides, epoxy resins, polyurethane, aluminum oxide (Al₂O₃), silicon dioxide (SiO₂), zirconium dioxide (ZrO₂), titanium oxide (TiO₂), nitrides (e.g. silicon nitride, aluminum nitride), wherein preferably the material has a purity of at least 98% and particularly preferably of at least 99.4%.

10. System according to one of the preceding claims, **characterized in that** the end face of the thread is coated with an electrically insulating material.

11. System according to one of the preceding claims, **characterized in that** the second component is a sonotrode and the first component is a converter or an amplitude transformer and comprises the screw (4, 14), which has a second external thread, wherein preferably the second external thread has no coating.

12. System according to claim 11, **characterized in that** a collar (7, 7') is arranged between the first and second external threads, which collar has a diameter d_{B} which is greater than the nominal diameter dᵣ, wherein preferably the diameter d_{B} is greater than the nominal diameter dᵣ by at least 5%, particularly preferably by at least 10% and best between 12% and 25%.

13. System according to claim 12, **characterized in that** the collar (7, 7') is coated on its side facing the first external thread with an electrically insulating material (8), wherein preferably the collar (7, 7') is coated all around.

14. System according to one of the preceding claims, **characterized in that** the screw either engages with the first external thread (5) in a threaded bore of the first component and with the second external thread (6) in a threaded bore of the second component, or
engages with the first external thread (5) in a threaded bore of the second component and with the second external thread (6) in a threaded bore of the first component, wherein preferably the system is an ultrasonic vibration system, wherein either
the first component is a sonotrode and the second component is a converter, or
the first component is a sonotrode and the second component is an amplitude transformer or
the first component is an amplitude transformer and the second component is a converter.

15. System consisting of a first and a second component, wherein the first component comprises a component part with an internal thread with a nominal diameter d'ᵣ and consists of a metallic material and has a coating of an electrically insulating material covering the component part at least in the region of the internal thread, and the second component is a screw with an external thread with a nominal diameter D', a thread flank angle α', a core diameter D'₁ and a thread depth H'₁ or comprises such a screw, wherein the screw is screwed into the internal thread, wherein the nominal diameter d'ᵣ is greater than the nominal diameter D'.

## Revendications

1. Système constitué d'un premier et d'un deuxième composant, dans lequel le premier composant est une vis (4,14) ou présente une telle vis (4,14) et le deuxième composant présente un filetage intérieur (15) avec un diamètre nominal D, un angle de flanc de filetage α, un diamètre central D₁ et une profondeur de filetage H₁ dans lequel la vis du premier composant est vissée, dans lequel la vis (4, 14) présente un premier filetage extérieur (5) et est constituée d'un élément central métallique et d'un revêtement (8) recouvrant l'élément central au moins dans la zone d'un filetage formé sur l'élément central, composé d'un matériau électriquement isolant, dans lequel le filetage de l'élément central métallique présente un diamètre nominal dᵣ, qui est inférieur au diamètre nominal D, et dans lequel le premier filetage extérieur de la vis (4, 14) est formé sur le revêtement électriquement isolant (8), qui est appliqué sur le filetage formé sur l'élément central métallique.

2. Système selon la revendication 1, **caractérisé en ce que** le deuxième composant est une sonotrode ou un transformateur d'amplitude, dans lequel le filetage intérieur (15) est disposé dans une surface de couplage, dans lequel la surface de couplage est revêtue d'un matériau électriquement isolant (16), dans lequel de préférence la surface de couplage et le filetage sont revêtus du même matériau isolant.

3. Système selon la revendication 1 ou 2, **caractérisé en ce que** le diamètre nominal dr, soit
i) est inférieur d'au moins 0,1 mm, de préférence d'au moins 0,2 mm et de manière particulièrement préférée entre 0,25 mm et 0,8 mm au diamètre nominal D, soit
ii) est inférieur d'au moins 1 %, de préférence d'au moins 2 % et de manière particulièrement préférée entre 2,5 % et 8 % au diamètre nominal D.

4. Système selon l'une quelconque des revendications précédentes, **caractérisé en ce que** le filetage de l'élément central présente un diamètre central d₁ qui est inférieur au diamètre central D₁.

5. Système selon l'une quelconque des revendications précédentes, **caractérisé en ce que** le filetage de l'élément central présente un angle de flanc de filetage α₁ qui est supérieur à l'angle de flanc de filetage α, dans lequel de préférence l'angle de flanc de filetage α1 est supérieur d'au moins 0,5°, de préférence d'au moins 1° et de manière particulièrement préférée entre 1,25° et 2,5° à l'angle de flanc de filetage α.

6. Système selon l'une quelconque des revendications précédentes, **caractérisé en ce que** le filetage de l'élément central présente une surface de tête de flanc de dent (11), qui est incurvée de manière convexe, dans lequel de préférence la surface de tête de flanc de dent (11) incurvée présente un rayon de courbure qui est inférieur à 1 mm, dans lequel le rayon de courbure est de manière particulièrement préférée supérieur à 0,1 mm.

7. Système selon l'une quelconque des revendications précédentes, **caractérisé en ce que** le filetage intérieur est un filetage intérieur ISO métrique.

8. Système selon l'une quelconque des revendications précédentes, **caractérisé en ce que** le revêtement (8) présente une épaisseur entre 0,02 et 0,2 mm et de préférence entre 0,025 et 0,1 mm.

9. Système selon l'une quelconque des revendications précédentes, **caractérisé en ce que** le revêtement électriquement isolant (8) est un matériau choisi dans le groupe constitué de parylènes, polyimides, résines époxy, polyuréthane, oxyde d'aluminium (Al₂O₃), dioxyde de silice (SiO₂), dioxyde de zirconium (ZrO₂), oxyde de titane (TiO₂), nitrures (p. ex. nitrure de silicium, nitrure d'aluminium), dans lequel le matériau présente de préférence une pureté d'au moins 98 % et de manière particulièrement préférée d'au moins 99,4 %.

10. Système selon l'une quelconque des revendications précédentes, **caractérisé en ce que** la surface frontale du filetage est revêtue d'un matériau électriquement isolant.

11. Système selon l'une quelconque des revendications précédentes, **caractérisé en ce que** le deuxième composant est une sonotrode et le premier composant est un convertisseur ou un transformateur d'amplitude et présente la vis (4, 14) qui présente un deuxième filetage extérieur, dans lequel de préférence le deuxième filetage extérieur ne présente pas de revêtement.

12. Système selon la revendication 11, **caractérisé en ce qu'**est disposé entre le premier et le deuxième filetage extérieur un collet (7, 7'), qui présente un diamètre d_{B} qui est supérieur au diamètre nominal dᵣ, dans lequel de préférence le diamètre d_{B} est supérieur d'au moins 5 %, de manière particulièrement préférée d'au moins 10 % et idéalement entre 12 % et 25 % au diamètre nominal dᵣ.

13. Système selon la revendication 12, **caractérisé en ce que** le collet (7, 7') est revêtu sur son côté tourné vers le premier filetage extérieur d'un matériau (8) électriquement isolant, dans lequel le collet (7, 7') est de préférence entièrement revêtu.

14. Système selon l'une quelconque des revendications précédentes, **caractérisé en ce que** la vis soit
vient en prise par le premier filetage extérieur (5) avec un taraudage du premier composant et par le deuxième filetage extérieur (6) avec un taraudage du deuxième composant soit
vient en prise par le premier filetage extérieur (5) avec un taraudage du deuxième composant et par le deuxième filetage extérieur (6) avec un taraudage du premier composant, dans lequel le système est de préférence un système oscillant à ultrasons, dans lequel soit
le premier composant est une sonotrode et le deuxième composant est un convertisseur, soit le premier composant est une sonotrode et le deuxième composant est un transformateur d'amplitude, soit
le premier composant est un transformateur d'amplitude et le deuxième composant est un convertisseur.

15. Système constitué d'un premier et d'un deuxième composant, dans lequel le premier composant présente un composant avec un filetage intérieur avec un diamètre nominal d'r et constitué d'un matériau métallique et a un revêtement recouvrant le composant au moins dans la zone du filetage intérieur, composé d'un matériau électriquement isolant, et le deuxième composant est une vis avec un filetage extérieur avec un diamètre nominal D', un angle de flanc de filetage α', un diamètre central D'₁ et une profondeur de filetage H'₁ ou présente une telle vise, dans lequel la vis est vissée dans le filetage intérieur, dans lequel le diamètre nominal d'r est supérieur au diamètre nominal D'.
